Europäisches Patentamt

European Patent Office

Office européen des brevets

(19)

(11) **EP 1 034 222 B1**

(12) **FASCICULE DE BREVET EUROPEEN**

(45) Date de publication et mention
de la délivrance du brevet:
**09.04.2003 Bulletin 2003/15**

(51) Int Cl.7: **C09C 1/56**, C09C 3/06,
C08K 9/02, C08L 21/00

(21) Numéro de dépôt: **98959892.5**

(22) Date de dépôt: **27.11.1998**

(86) Numéro de dépôt international:
**PCT/EP98/07678**

(87) Numéro de publication internationale:
**WO 99/028391 (10.06.1999 Gazette 1999/23)**

(54) **NOIR DE CARBONE REVETU D'UNE COUCHE ALUMINEUSE ET PROCEDE POUR L'OBTENIR**

RUSS BESCHICHTET MIT ALUMINUMHALTIGER SCHICHT UND VERFAHREN ZU DESSEN
HERSTELLUNG

CARBON BLACK COATED WITH AN ALUMINOUS LAYER AND METHOD FOR OBTAINING SAME

(84) Etats contractants désignés:
**BE DE ES FR GB IT NL**

(30) Priorité: **28.11.1997 FR 9715129**

(43) Date de publication de la demande:
**13.09.2000 Bulletin 2000/37**

(73) Titulaire: **Compagnie Générale des
Etablissements MICHELIN-MICHELIN & CIE
63040 Clermont-Ferrand Cedex 09 (FR)**

(72) Inventeurs:
• **CUSTODERO, Emmanuel
F-63400 Chamalières (FR)**
• **SIMONOT, Laure
F-63000 Clermont-Ferrand (FR)**
• **TARDIVAT, Jean-Claude
F-63000 Clermont-Ferrand (FR)**

(74) Mandataire: **Ribière, Joel
Michelin & Cie
Service SGD/LG/PI-LAD
63040 Clermont-Ferrand Cedex 09 (FR)**

(56) Documents cités:
**EP-A- 0 581 651        EP-A- 0 736 491
DE-A- 3 502 494        DE-A- 4 116 523
US-A- 3 025 173        US-A- 5 145 719**

• **CHEMICAL ABSTRACTS, vol. 127, no. 21, 24
novembre 1997 Columbus, Ohio, US; abstract
no. 294679, KUROZUMI TADATOSHI ET AL.:
"Carbon black with surface modified with
oxides" XP002095828 & JP 09 272816 A (SHOWA
DENKO K. K.) 21 octobre 1997**
• **DATABASE WPI Section Ch, Week 9231 Derwent
Publications Ltd., London, GB; Class A60, AN
92-256418 XP002095980 & JP 04 175219 A (UBE
NITTO KASEI CO) , 23 juin 1992**

**Description**

La présente invention est relative aux charges renforçantes capables de renforcer des compositions de caoutchoucs diéniques utilisables pour la fabrication de pneumatiques ou de produits semi-finis pour pneumatiques, en particulier de bandes de roulement de ces pneumatiques. Elle se rapporte plus particulièrement à de nouveaux noirs de carbone à surface modifiée ainsi qu'à leurs procédés d'obtention.

De façon à réduire la consommation de carburant et les nuisances émises par les véhicules à moteur, des efforts importants ont été réalisés par les concepteurs de pneumatiques afin d'obtenir des pneumatiques présentant à la fois une très faible résistance au roulement, une adhérence améliorée tant sur sol sec que sur sol humide ou enneigé et une très bonne résistance à l'usure.

De nombreuses solutions ont ainsi été proposées pour abaisser la résistance au roulement et améliorer l'adhérence des pneumatiques, mais celles-ci se traduisent en général par une déchéance très importante de la résistance à l'usure. Il est bien connu notamment que l'incorporation de charges blanches conventionnelles comme par exemple la silice ($SiO_2$), l'alumine ($Al_2O_3$), l'oxyde de titane ($TiO_2$), la craie, le talc, des argiles telles que la bentonite ou le kaolin par exemple, dans des compositions de caoutchouc utilisées pour la fabrication de pneumatiques et notamment de bandes de roulement, se traduit certes par un abaissement de la résistance au roulement et par une amélioration de l'adhérence sur sol mouillé, enneigé ou verglacé, mais aussi par une déchéance inacceptable de la résistance à l'usure liée au fait que ces charges blanches conventionnelles n'ont pas de capacité de renforcement suffisante vis-à-vis de telles compositions de caoutchouc ; on qualifie généralement ces charges blanches, pour cette raison, de charges non renforçantes encore appelées charges inertes.

Une solution efficace à ce problème a été décrite dans la demande de brevet EP-A-0 501 227 qui divulgue une composition de caoutchouc diénique particulière renforcée d'une silice précipitée hautement dispersible. Cette composition permet de fabriquer un pneumatique ayant une résistance au roulement nettement améliorée, sans affecter les autres propriétés, en particulier celles d'adhérence, d'endurance et surtout de résistance à l'usure.

Depuis la publication de cette demande EP-A-0 501 227, l'intérêt pour les compositions renforcées de silice a été très largement relancé. Cependant, les silices présentent de manière générale l'inconvénient d'être difficilement dispersibles. En outre, les compositions chargées en silice, comparativement à celles chargées en noir de carbone, présentent de manière connue l'inconvénient d'avoir d'une part une mise en oeuvre (i.e. une aptitude à la transformation ou "processability") à l'état cru plus difficile, d'autre part une très haute résistance électrique.

Des charges plus facilement dispersibles que les silices, non seulement capables comme ces dernières d'abaisser la résistance au roulement et d'améliorer l'adhérence des pneumatiques, mais encore d'offrir un haut niveau de renforcement, et donc de résistance à l'usure, ainsi qu'une conductivité électrique élevée aux compositions de caoutchouc qu'elles renforcent, étaient donc tout à fait souhaitables pour les fabricants de pneumatiques.

La Demanderesse a découvert lors de ses recherches une charge renforçante nouvelle, en l'espèce un nouveau noir de carbone à surface modifiée (ci-après dénommé "noir modifié") qui peut répondre de manière inattendue à ces différentes exigences contradictoires.

L'invention concerne tout d'abord un procédé pour recouvrir au moins en partie un noir de carbone d'une couche adhérente d'oxyde et/ou hydroxyde d'aluminium, ce procédé comportant les étapes suivantes:

a) - on imprègne le noir de carbone d'une suspension colloïdale formée par hydrolyse d'une solution d'alkoxyde d'aluminium dans un solvant alcoolique;
b) - on élimine le solvant alcoolique par évaporation;
c) - on traite thermiquement le noir ainsi imprégné de manière à transformer la couche alumineuse présente à sa surface en une couche adhérente d'oxyde et/ou hydroxyde d'aluminium.

L'invention concerne d'autre part tout noir de carbone revêtu d'une couche adhérente d'oxyde et/ou hydroxyde d'aluminium, susceptible d'être obtenu par le procédé de l'invention.

Un mode préférentiel de réalisation de l'invention concerne un noir de carbone modifié du type renforçant pour pneumatique ayant les caractéristiques suivantes:

- (i) il est revêtu au moins en partie d'une couche d'oxyde et/ou hydroxyde d'aluminium;
- (ii) sa surface spécifique BET est comprise entre 30 et 400 $m^2$/g;
- (iii) sa taille moyenne (en masse) de particules, notée $d_w$, est comprise entre 20 et 400 nm;
- (iv) sa vitesse de désagglomération, notée $\alpha$, mesurée au test dit de désagglomération aux ultrasons, à 10% de puissance d'une sonde ultrasons de 600 watts, est supérieure à $1.10^{-3}$ $\mu m^{-1}$/s.

Ce noir renforçant pour pneumatique est obtenu en mettant en oeuvre le procédé de l'invention sur un noir de carbone de départ de grade pneumatique ; grâce à sa combinaison spécifique de caractéristiques, notamment à ses propriétés de surface particulières, il présente une excellente dispersibilité dans des compositions de caoutchouc diénique destinées à la fabrication de pneumatiques, ainsi qu'un haut pouvoir renforçant. Il offre à de telles compositions non seulement des propriétés d'hystérèse et d'adhérence améliorées, mais encore une conductivité électrique élevée.

L'invention a aussi pour objet l'utilisation du noir de carbone spécifique ci-dessus, à titre de charge renforçante, dans une composition de caoutchouc diénique utilisable pour la fabrication de pneumatiques, notamment pour des bandes de roulement de pneumatiques présentant une faible résistance au roulement.

Un autre objet de l'invention consiste en un procédé pour renforcer une composition de caoutchouc diénique utilisable pour la fabrication de pneumatiques, caractérisé en ce qu'on incorpore à cette composition, par mélangeage dans un mélangeur interne, le noir spécifique ci-dessus, avant l'introduction du système de vulcanisation.

Des noirs de carbone à surface modifiée, recouverts d'une couche siliceuse, ont certes déjà été décrits dans des demandes de brevet récentes, notamment à titre de charge renforçante pour compositions de caoutchouc pour pneumatiques (voir par exemple EP-A-0 711 805, EP-A-0 799 854, EP-A-0 799 867, WO96/37547). De manière générale, ces nouvelles charges et leur potentiel d'application en pneumatiques sont encore mal connus des fabricants de pneumatiques. Comparés à ces noirs de carbone recouverts d'une couche siliceuse, les noirs de carbone de l'invention présentent au moins l'avantage notable que leur couche alumineuse de surface, faite d'oxydes et/ou hydroxydes d'aluminium qui, de manière connue, sont plus stables et chimiquement plus réactifs que les oxydes de silicium, sera par conséquent plus adhérente aux particules de noir et plus réactive que ne peut l'être une couche siliceuse. En outre, comparé à de la silice, même à une silice hautement dispersible, le noir de carbone pour pneumatique de l'invention présente l'avantage d'être plus facilement dispersible dans les compositions de caoutchouc et de procurer à ces dernières une mise en oeuvre à l'état cru qui est facilitée.

La demande de brevet WO97/42256 décrit quant à elle, comme charges potentielles de compositions de caoutchouc, des noirs de carbone traités directement dans le réacteur de synthèse du noir de carbone par divers composés métalliques se présentant notamment sous forme d'oxydes, d'hydroxydes ou de carbures de différents métaux (par exemple aluminium, zinc, magnésium, calcium, titane, vanadium, cobalt, nickel, zirconium, étain, antimoine, chrome, néodyme, plomb, tellure, barium, césium, fer, molybdène). Les noirs ainsi traités à très haute température dans le réacteur de synthèse consistent en fait en des agrégats ou particules hybrides à deux phases, formés par un mélange intime de noir de carbone et de composé métallique, le composé métallique étant localisé tant à l'intérieur que près de la surface des agrégats ; il est précisé notamment que la teneur en atome métallique peut atteindre 50% voire même 99% de la masse de la particule finale (% en masse). On comprend bien que de telles charges hybrides. si elles étaient libérées par un moyen quelconque de leur fraction de composé métallique, par exemple par un traitement chimique approprié, n'auraient ni la morphologie ni les propriétés d'un noir de carbone conventionnel, mais celles de résidus carbonés à forte porosité. En cela, les noirs de carbone traités décrits dans WO97/42256 ne doivent par être confondus avec des noirs de carbone uniquement revêtus d'une couche de composé métallique qui, après élimination d'un tel revêtement. retrouveraient quant à eux leur structure initiale.

L'état de la technique est également constitué par les documents JP 09 272816 et DE 4116523. La demande publiée sous le N° JP 09 272816 décrit (abrégé JAPIO) un procédé consistant à modifier la surface d'un noir de carbone par mise en suspension dans une substance colloïdale de divers oxydes et/ou hydroxydes métalliques (Fe, Cr, Mn, Cu, Zn, etc.). La demande DE 4116523 décrit un procédé de synthèse d'alumine ($Al_2O_3$) $\alpha$ à partir de l'hydrolyse de divers composés organiques de l'aluminium. Aucun des ces documents ne s'intéresse à un noir de carbone du type renforçant pour pneumatique, recouvert spécifiquement d'oxyde et/ou d'hydroxyde d'aluminium et vérifiant en combinaison les caractéristiques précitées de BET, de taille des particules et de vitesse de désagglomération.

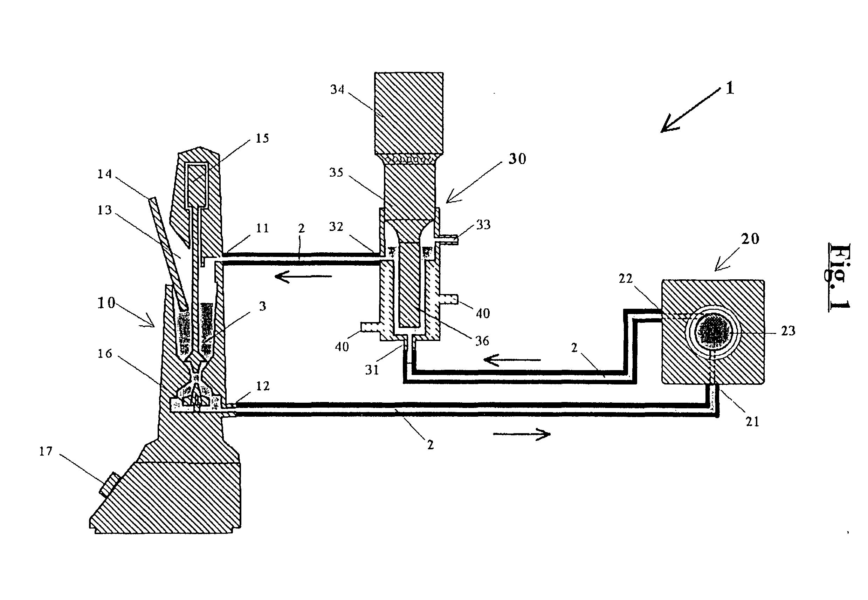

L'invention ainsi que ses avantages seront aisément compris à la lumière de la description et des exemples de réalisation qui suivent, ainsi que des figures 1 à 3 relatives à ces exemples qui représentent:

- un schéma de dispositif apte à mesurer la vitesse de désagglomération aux ultrasons ($\alpha$) d'une charge se présentant sous la forme d'agglomérats de particules (fig. 1);
- des courbes d'évolution de la taille des agglomérats au cours d'une sonification à l'aide du dispositif de la figure 1, pour des charges conformes on non à l'invention, courbes à partir desquelles sont déterminées les vitesses de désagglomération $\alpha$ (fig. 2 et fig. 3).

**I. MESURES ET TESTS UTILISES**

I-1. Caractérisation des charges renforçantes

Les charges renforçantes utilisées sont caractérisées comme indiqué ci-après.

a) surface spécifique BET:

La surface spécifique BET est déterminée de manière connue, selon la méthode de Brunauer-Emmet-Teller décrite dans "*The Journal of the American Chemical Society*" Vol. 60, page 309, février 1938 et correspondant à la norme AFNOR-NF-T45-007 (novembre 1987).

b) taille moyenne des particules $d_w$ :

La taille moyenne (en masse) des particules, notée $d_w$, est mesurée de manière classique après dispersion, par désagglomération aux ultrasons, de la charge à analyser dans une solution aqueuse à 15% d'éthanol et 0,05% d'un agent tensioactif non ionique (% en volume).

Le terme "particule" utilisé dans la présente demande doit être compris dans son sens générique habituel d'agrégat, et non dans celui de particule élémentaire éventuelle pouvant former une partie de cet agrégat (par agrégat, il faut entendre de manière connue un ensemble insécable de particules élémentaires, produit lors de la synthèse de la charge).

La détermination a lieu au moyen d'un photosédimentomètre centrifuge type "DCP" ("Disk Centrifuge Photosedimentometer" commercialisé par la société Brookhaven Instruments). Une suspension de 10 mg de noir de carbone est préalablement réalisée dans 40 ml d'une solution aqueuse à 15% d'éthanol et 0,05% d'un agent tensioactif non ionique (% en volume), par action durant 10 minutes à 60% de puissance (soit 60 % de la position maxi du "tip amplitude") d'une sonde ultrasons de 600 W (Sonificateur Vibracell 1/2 pouce commercialisé par la société Bioblock). Pendant la sonification, un gradient composé de 15 ml d'eau (à 0,05% d'un tensioactif non ionique) et de 1 ml d'éthanol est injecté dans le disque du sédimentomètre en rotation à 8000 tours/min afin de constituer un "*step gradient*". Ensuite, 0,3 ml de la suspension de noir de carbone est injecté à la surface du gradient ; après sédimentation durant 120 min, la distribution en masse des tailles de particule et la taille moyenne en masse $d_w$ ($d_w = \Sigma(n_i\,d_i^5) / \Sigma(n_i\,d_i^4)$ avec $n_i$ nombre d'objets de la classe de taille $d_i$) sont calculées par le logiciel du sédimentomètre.

c) vitesse de désagglomération $\alpha$:

La vitesse de désagglomération notée $\alpha$ est mesurée au test dit "test de désagglomération aux ultrasons", à 10% de puissance d'une sonde de 600 watts. Ce test permet de mesurer en continu l'évolution de la taille des agglomérats de particules durant une sonification, selon les indications ci-après.

Le montage utilisé est constitué d'un granulomètre laser (type "Mastersizer S", commercialisé par Malvern Instruments - source laser He-Ne émettant dans le rouge, longueur d'onde 632,8 nm) et de son préparateur ("Malvern Small Sample Unit MSX1"), entre lesquels a été intercalée une cellule de traitement en flux continu (Bioblock M72410) munie d'une sonde ultrasons (Sonificateur 1/2 pouce type Vibracell de 600 W commercialisé par la société Bioblock).

Une faible quantité (15 mg) de charge à analyser est introduite dans le préparateur avec 160 ml d'une solution aqueuse contenant 20 % en masse d'éthanol, la vitesse de circulation étant fixée à son maximum. Au moins trois mesures consécutives sont réalisées pour déterminer selon la méthode de calcul connue de Fraunhofer (matrice de calcul Malvern 3$$D) le diamètre initial moyen (en volume) des agglomérats, noté $d_v[0]$. La sonification est ensuite établie à une puissance de 10% (soit 10% de la position maxi du "tip amplitude") et on suit durant 8 minutes environ l'évolution du diamètre moyen en volume $d_v[t]$ en fonction du temps "t" à raison d'une mesure toutes les 10 secondes environ. Après une période d'induction d'environ 3 minutes, il est observé que l'inverse du diamètre moyen en volume $1/d_v[t]$ varie linéairement avec le temps "t" (régime stable de désagglomération). La vitesse de désagglomération $\alpha$ est calculée par régression linéaire de la courbe d'évolution de $1/d_v[t]$ en fonction du temps "t", dans la zone de régime stable de désagglomération. Elle est exprimée en $\mu m^{-1}/s$.

A titre d'exemple et de référence, le test de désagglomération aux ultrasons ci-dessus, appliqué à une silice témoin bien connue de l'homme du métier pour sa très haute dispersibilité (silice commercialisée par la société Rhône-Poulenc sous la référence Zeosil 1165MP), conduit à une vitesse de désagglomération, notée $\alpha_o$, d'environ $1.5.10^{-3}$ $\mu m^{-1}/s$.

La figure 1 schématise un exemple de montage du dispositif de mesure utilisable pour la réalisation de ce test de désagglomération aux ultrasons. Ce dispositif consiste en un circuit fermé 1 dans lequel peut circuler un flux 2 d'agglomérats de particules en suspension dans un liquide 3. Ce dispositif comporte essentiellement un préparateur d'échantillon 10, un granulomètre laser 20 et une cellule de traitement 30. Une mise à la pression atmosphérique (13, 33), au niveau du préparateur d'échantillon 10 et de la cellule de traitement 30 elle-même, permet l'élimination en continu des bulles d'air qui se forment durant la sonification (i.e. l'action de la sonde ultrasons).

Le préparateur d'échantillon 10 ("Malvern Small Sample Unit MSX1") est destiné à recevoir l'échantillon de charge à tester (telle quelle ou déjà en suspension dans le liquide 3) et à l'envoyer à travers le circuit 1 à une vitesse réglée (potentiomètre 17), sous la forme d'un flux 2 de suspension liquide. Ce préparateur 10 consiste simplement en une cuve de réception qui contient, et à travers laquelle circule, la suspension à analyser. Il est équipé d'un moteur d'agitation 15, à vitesse modulable, afin d'éviter une sédimentation des agglomérats de particules de la suspension ; une mini-pompe centrifuge 16 est destinée à assurer la circulation de la suspension 2 dans le circuit 1; l'entrée 11 du préparateur 10 est reliée à l'air libre via une ouverture 13 destinée à recevoir l'échantillon de charge à tester et/ou le liquide 3 utilisé pour la suspension.

Au préparateur 10 est connecté un granulomètre laser 20 ("Mastersizer S") dont la fonction est de mesurer en continu, à intervalles de temps réguliers, la taille moyenne "$d_v$" des agglomérats, au passage du flux 2, grâce à une cellule de mesure 23 à laquelle sont couplés les moyens d'enregistrement et de calcul automatiques du granulomètre 20. On rappelle ici brièvement que les granulomètres laser exploitent, de manière connue, le principe de la diffraction de la lumière par des objets solides mis en suspension dans un milieu dont l'indice de réfraction est différent de celui du solide. Selon la théorie de Fraunhofer, il existe une relation entre la taille de l'objet et l'angle de diffraction de la lumière (plus l'objet est petit et plus l'angle de diffraction sera élevé). Pratiquement, il suffit de mesurer la quantité de lumière diffractée pour différents angles de diffraction pour pouvoir déterminer la distribution de taille (en volume) de l'échantillon, $d_v$ correspondant à la moyenne de cette distribution ($d_v = \Sigma(n_i\, d_i^4) / \Sigma(n_i\, d_i^3)$ avec $n_i$ nombre d'objets de la classe de taille $d_i$).

Intercalée entre le préparateur 10 et le granulomètre laser 20 se trouve enfin une cellule de traitement 30 équipée d'une sonde ultrasons 35 (convertisseur 34 et tête de sonde 36) destinée à casser en continu les agglomérats de particules au passage du flux 2.

On préfère que la cellule de traitement 30 soit disposée entre la sortie 22 du granulomètre 20 et l'entrée 11 du préparateur 10, de telle manière que, en fonctionnement, le flux 2 de particules sortant du préparateur 10 traverse d'abord le granulomètre laser 20 avant d'entrer dans la cellule de traitement 30. Cette disposition a deux avantages majeurs pour les mesures : d'une part, les bulles d'air dues à l'action de la sonde ultrasons sont éliminées à la traversée du préparateur 10 (qui est à l'air libre), c'est-à-dire avant l'entrée dans le granulomètre 20 ; elles ne perturbent donc pas la mesure de diffraction laser ; d'autre part, l'homogénéité de la suspension est améliorée par un passage préalable dans le préparateur 10.

La cellule de traitement 30 est de préférence agencée de telle manière que le flux 2 de particules qui y pénètre, par une entrée 31, passe d'abord devant la tête 36 de la sonde ultrasons 35 ; cette disposition non conventionnelle (le flux 2 entre par le bas 31 de la cellule. et non par le haut 32) présente les avantages suivants: d'une part, toute la suspension circulante 2 est forcée de passer devant l'extrémité 36 de la sonde ultrasons 35, zone la plus active en termes de désagglomération ; d'autre part, cette disposition permet un premier dégazage après sonification dans le corps de la cellule de traitement 30 elle-même, la surface de la suspension 2 étant alors en contact avec l'atmosphère au moyen d'un tuyau 33 de faible diamètre.

Le flux 2 est de préférence thermostaté par l'intermédiaire d'un circuit de refroidissement 40 disposé, au niveau de la cellule 30, dans une double enveloppe entourant la sonde 35, la température étant contrôlée par exemple par une sonde de température 14 plongeant dans le liquide 3 au niveau du préparateur 10. La disposition des différents éléments du dispositif de mesure est optimisée de façon à limiter autant que possible le volume circulant, c'est-à-dire la longueur des tuyaux de raccordement (par exemple des tuyaux souples).

I-2. Caractérisation des compositions de caoutchouc

Les compositions de caoutchouc sont caractérisées, avant et après cuisson, comme indiqué ci-après.

a) plasticité Mooney:

On utilise un consistomètre oscillant tel que décrit dans la norme AFNOR-NF-T43-005 (Novembre 1980). La mesure de plasticité Mooney se fait selon le principe suivant : le mélange cru est moulé dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unités Mooney" (UM).

b) essais de traction:

Ces essais permettent de déterminer les contraintes d'élasticité et les propriétés à la rupture. Ils sont effectués, sauf indications différentes, conformément à la norme AFNOR-NF-T46-002 de septembre 1988.

On mesure en seconde élongation (i.e. après un cycle d'accommodation) les modules sécants à 10 % d'allongement (M10), 100 % d'allongement (M100) et 300 % d'allongement (M300), calculés en se ramenant à la section réelle de l'éprouvette. Toutes ces mesures de traction sont effectuées dans les conditions normales de température et d'hygrométrie selon la norme AFNOR-NF-T40-101 (décembre 1979).

c) pertes hystérétiques:

Les pertes hystérétiques (PH) sont mesurées par rebond à 60°C au 6ème choc, et exprimées en % selon la relation suivante:

$$PH\ (\%) = 100\ [(W_0 - W_1)\ /\ W_0],$$

avec $W_0$ : énergie fournie ; $W_1$ : énergie restituée.

d) propriétés dynamiques:

Les propriétés dynamiques, notées $\Delta G^*$ et $\tan(\delta)_{max}$, mesurées en fonction de la déformation. sont effectuées à 10 Hertz avec une déformation crête-crête allant de 0,15% à 50%. La non-linéarité $\Delta G^*$ est la différence de module de cisaillement entre 0,15% et 50% de déformation, exprimée en MPa. L'hystérèse est exprimée par la mesure de $\tan(\delta)_{max}$ qui correspond au maximum de $\tan(\delta)$.

## II. CONDITIONS DE REALISATION DE L'INVENTION

II-1. Synthèse et propriétés du noir modifié

Le procédé de l'invention, pour recouvrir au moins en partie un noir de carbone d'une couche adhérente d'oxyde et/ou hydroxyde d'aluminium comporte au moins les étapes suivantes:

a) - imprégner le noir de carbone d'une suspension colloïdale formée par hydrolyse d'une solution d'alkoxyde d'aluminium dans un solvant alcoolique;
b) - éliminer le solvant alcoolique par évaporation;
c) - traiter thermiquement le noir ainsi imprégné de manière à transformer la couche alumineuse présente à sa surface en une couche adhérente d'oxyde et/ou hydroxyde d'aluminium.

Comme noir de carbone de départ conviennent tous les noirs de carbone.
Par oxyde et/ou hydroxyde d'aluminium, on entend tout composé d'aluminium répondant, aux impuretés et à l'eau d'hydratation près, à la formule générale (I) qui suit (a et b nombres réels):

$$(I) \qquad Al(OH)_a O_b,$$

avec: $0 \leq a \leq 3$ et $b = (3-a)\ /\ 2$ .
Une telle formule englobe les oxydes d'aluminium purs ou alumines $Al_2O_3$ (a=0), les tri-hydroxydes d'aluminium $Al(OH)_3$ (a=3), les oxyde-hydroxydes intermédiaires (0<a<3), ainsi que leurs formes hydratées éventuelles, ou un mélange de tels tri-hydroxydes et/ou oxyde-hydroxydes. Cette formule est donnée aux impuretés près étant entendu que les oxydes et/ou hydroxydes d'aluminium présents à la surface du noir de carbone modifié peuvent comporter une certaine proportion d'impuretés liées au procédé mis en oeuvre pour la fabrication de la charge.
Par suspension colloïdale, on entend de manière connue une suspension de phase solide dans un liquide dont la taille des objets solides est inférieure au micromètre ; pour la formation de la suspension colloïdale d'imprégnation, on dissout sous agitation et température l'alkoxyde d'aluminium dans l'alcool sélectionné.
De préférence, le solvant alcoolique est sélectionné parmi le méthanol, l'éthanol, l'(iso)propanol, les différents isomères du butanol, ou un mélange de deux ou plus de ces composés. L'alkoxyde d'aluminium utilisé est de préférence un alkoxyde d'aluminium comportant de 1 à 6 atomes de carbone ; il est plus préférentiellement choisi parmi le méthoxyde, l'éthoxyde, l'(iso)propoxyde et les butoxydes d'aluminium, ou un mélange de deux ou plus de ces composés.
L'étape d'imprégnation peut être conduite à la température ambiante (20°C) ou à une température supérieure, par exemple entre 30°C et 65°C selon la nature de l'alcool ou des alcools utilisés, bien sûr inférieure à la température d'ébullition de la suspension, étant entendu que la température choisie peut être proche de cette température d'ébullition. La durée d'imprégnation est choisie suffisamment longue, de quelques minutes à plusieurs heures selon les cas. afin de créer des interactions physico-chimiques suffisantes entre la surface du noir de carbone et le composé à base d'aluminium.
De préférence, dans le procédé conforme à l'invention, la suspension colloïdale d'imprégnation comporte de l'acide nitrique en tant que catalyseur d'hydrolyse de la solution d'alkoxyde ; l'acide nitrique a en outre, vis-à-vis de la suspension colloïdale, une fonction avantageuse d'agent peptisant (i.e. d'agent dispersant).

L'élimination du solvant alcoolique, après imprégnation du noir de carbone, peut être réalisée par tout moyen approprié, par exemple par évacuation sous vide, sous agitation. Si de l'acide nitrique a été utilisé dans la suspension colloïdale, il est à ce stade éliminé par lavage à l'eau suivi d'un séchage du noir imprégné et lavé.

L'étape de traitement thermique est conduite de préférence sous gaz inerte, par exemple sous argon, la température de traitement étant de préférence comprise entre 100°C et 900°C, plus préférentiellement entre 150°C et 850°C. De manière générale, plus cette température de traitement est élevée, plus la formule (I) définie précédemment "se déplace" de l'hydroxyde vers l'oxyde (diminution de a et augmentation de b) ; un traitement à une température de 800-850°C, par exemple, conduira à une couche alumineuse essentiellement constituée d'alumine ($Al_2O_3$).

L'homme du métier saura ajuster les différents paramètres du procédé ci-dessus en fonction des conditions particulières de mise en oeuvre de l'invention, à la lumière de la description et des exemples de réalisation qui suivent.

De préférence, le taux d'aluminium (de l'élément A1) présent à la surface du noir de carbone ainsi obtenu est supérieur à 0,25% (% en masse de noir modifié, déterminé par analyse chimique), plus préférentiellement supérieur à 0,5%. Avantageusement, ce taux d'aluminium est ajusté dans un domaine compris entre 0.5% et 5%.

Le noir modifié de l'invention, grâce à sa couche adhérente d'oxyde et/ou hydroxyde d'aluminium, est susceptible d'être utilisé dans de nombreuses applications, par exemple comme pigment dans des encres, des peintures, des minéraux ou des articles en matière plastique. L'augmentation de sa polarité de surface, due à la présence d'oxyde et/ou hydroxyde d'aluminium, est favorable à une meilleure interaction entre le noir et sa matrice.

Toutefois, selon un mode préférentiel de réalisation de l'invention, le noir de carbone de l'invention est un noir de carbone du type renforçant pour pneumatique tel que décrit ci-après.

II-2. Noir modifié pour pneumatique

Selon un mode préférentiel de réalisation de l'invention, le noir de carbone de l'invention est un noir de carbone du type renforçant pour pneumatique ; on entend par là un noir de carbone utilisable pour le renforcement de compositions de caoutchouc diénique destinées à la fabrication de pneumatiques.

Ce noir modifié pour pneumatique est caractérisé par les points suivants:

- (i) il est revêtu au moins en partie d'une couche d'oxyde et/ou hydroxyde d'aluminium;
- (ii) sa surface spécifique BET est comprise entre 30 et 400 m²/g;
- (iii) sa taille moyenne (en masse) de particules, notée $d_w$, est comprise entre 20 et 400 nm;
- (iv) sa vitesse de désagglomération, notée $\alpha$, mesurée au test dit de désagglomération aux ultrasons, à 10% de puissance d'une sonde ultrasons de 600 watts, est supérieure à $1.10^{-3}$ $\mu m^{-1}/s$.

Pour des surfaces BET inférieures à 30 m²/g, les compositions de caoutchouc présentent certes une mise en oeuvre facilitée et une hystérèse réduite, mais on observe une déchéance des propriétés de rupture et de résistance à l'usure en pneumatique ; pour des surfaces BET supérieures à 400 m²/g, la mise en oeuvre à l'état cru devient plus difficile (plasticité Mooney plus élevée) et la dispersion de la charge s'en trouve dégradée. Pour des tailles $d_w$ trop élevées, supérieures à 400 nm, les particules se comportent comme des défauts qui localisent les contraintes et sont préjudiciables à l'usure ; des tailles $d_w$ trop petites, inférieures à 20 nm, vont par contre pénaliser la mise en oeuvre à l'état cru et la dispersion de la charge au cours de cette mise en oeuvre.

Pour toutes les raisons exposées ci-dessus, la surface BET est de préférence comprise dans un domaine de 50 à 300 m²/g et la taille de particules $d_w$ est de préférence comprise dans un domaine de 30 à 200 nm.

On sait de manière générale que pour obtenir les propriétés de renforcement optimales conférées par une charge dans une composition de caoutchouc pour pneumatique, il convient notamment que la charge soit présente dans la matrice caoutchouteuse sous une forme finale qui soit à la fois la plus finement divisée possible et répartie de la façon la plus homogène possible. Or, de telles conditions ne peuvent être réalisées que dans la mesure où la charge présente une très bonne aptitude, d'une part à s'incorporer dans la matrice lors du mélange avec l'élastomère et à d'autre part à se désagglomérer afin de se disperser de façon homogène dans l'élastomère.

La dispersibilité intrinsèque d'une charge peut être évaluée à l'aide du test de désagglomération décrit au chapitre I précédent, par mesure de sa vitesse $\alpha$ de désagglomération aux ultrasons. On a découvert que le noir modifié pour pneumatique conforme à l'invention, grâce à une vitesse de désagglomération $\alpha$ supérieure à $1.10^{-3}$ $\mu m^{-1}/s$, présente une bonne dispersibilité, c'est-à-dire que peu d'agglomérats microniques sont observés par réflexion en microscopie optique sur une coupe de composition caoutchouteuse.

Plus préférentiellement encore, pour une dispersion encore meilleure de la charge dans la matrice de caoutchouc diénique, et donc pour un renforcement optimal, le noir modifié pour pneumatique possède une vitesse de désagglomération $\alpha$ supérieure à $1,5.10^{-3}$ $\mu m^{-1}/s$. Ceci est particulièrement avantageux lorsque le noir modifié est utilisé pour la fabrication de bandes de roulement de pneumatiques présentant une faible résistance au roulement.

Le noir de carbone de l'invention, grâce à sa couche alumineuse de surface, présente en outre une réactivité de surface élevée, i.e. un taux élevé de fonctions de surface (AI-OH) réactives vis-à-vis d'un agent de couplage (charge/élastomère), ce qui est particulièrement favorable aux propriétés mécaniques des compositions de caoutchouc, c'est-à-dire à la fonction de renforcement remplie par la charge.

De préférence, le taux d'aluminium (de l'élément A1) présent à la surface du noir de carbone modifié pour pneumatique est supérieur à 0,25%, plus préférentiellement supérieur à 0,5% ; il est encore plus préférentiellement ajusté dans un domaine compris entre 0,5% et 5% (% en masse de noir modifié, déterminé par analyse chimique) pour les raisons exposées ci-après.

En dessous des minima indiqués, l'effet d'abaissement de l'hystérèse peut être insuffisant, selon la nature des compositions utilisées notamment de celle de l'élastomère, alors qu'au-delà du taux maximal préconisé, on n'observe généralement plus d'amélioration de l'hystérèse alors que l'on s'expose au risque d'aboutir d'une part à une dispersibilité trop faible du noir modifié, inconvénient connu des charges blanches par rapport au noir de carbone, d'autre part à une diminution d'adhérence de la couche alumineuse à la surface du noir de carbone. Un taux supérieur à 5% nécessiterait par ailleurs des quantités plus importantes de produit précurseur (alkoxyde d'aluminium) voire des temps d'imprégnation plus longs lors de la fabrication, ce qui est économiquement moins intéressant.

Pour une optimisation de l'adhérence de la couche alumineuse à la surface du noir ainsi que la dispersibilité de la charge dans la composition de caoutchouc, en particulier lorsque cette composition est destinée à une bande de roulement de pneumatique à faible résistance au roulement, on préfère que le taux d'aluminium soit ajusté entre 0,5% et 3%.

Grâce à ses caractéristiques spécifiques combinées, le noir modifié pour pneumatique possède des propriétés nouvelles et inattendues en termes de dispersibilité et de pouvoir renforçant : comparé à des noirs de carbone conventionnels, il offre aux compositions de caoutchouc des propriétés d'hystérèse et d'adhérence améliorées, typiques de celles pouvant être obtenues avec des charges blanches renforçantes telles que des charges siliceuses ; en outre, il garantit à ces compositions une conductivité électrique nettement supérieure à celles accessibles avec des charges blanches telles que la silice, proche de celles offertes par des noirs de carbone conventionnels et en tout cas suffisante pour dissiper par exemple des charges électrostatiques qui peuvent se former par frottement, en particulier lors du roulage des pneumatiques.

Pour l'obtention de ce noir modifié pour pneumatique, le procédé de l'invention utilise comme noir de carbone de départ tout noir de carbone conventionnellement utilisé dans les pneumatiques, particulièrement dans les bandes de roulement de ces pneumatiques, notamment des noirs du type HAF ("High Abrasion Furnace"), ISAF ("Intermediate Super Abrasion Furnace"), SAF ("Super Abrasion Furnace"). Parmi ces derniers, on citera plus particulièrement, comme noirs de carbone de départ, les noirs de carbone renforçants des séries 100. 200 ou 300 (grades ASTM).

De préférence, ces noirs de carbone de départ ont alors les caractéristiques suivantes:

- une surface BET comprise entre 20 et 200 $m^2/g$, plus préférentiellement comprise entre 50 et 170 $m^2/g$;
- une taille moyenne (en masse) de particules $d_w$ comprise entre 20 et 400 nm, plus préférentiellement comprise entre 30 et 200 nm.

A titre d'exemples non limitatifs de tels noirs de départ préférentiels, on citera les noirs N115, N134, N234, N339, N347, N375.

### III. EXEMPLES DE REALISATION DE L'INVENTION

III-1. Synthèse d'un noir modifié

La synthèse est réalisée conformément aux indications générales données au chapitre II précédent, selon les conditions particulières qui suivent.

a) préparation de la solution d'imprégnation:

Dans un premier temps, 8,0 g d'isopropoxyde d'aluminium ($Al(OCH(CH_3)_2)_3$ à 98% commercialisé par la société Sigma) sont dissous dans 200 ml d'éthanol anhydre par agitation magnétique à 500 tours/min à une température de 60°C ; au bout d'une heure, on ajoute 42,4 g d'eau déminéralisée et on maintient l'agitation à 60°C ; deux heures plus tard, on ajoute 10 ml d'acide nitrique concentré (à 53%) et on abaisse progressivement la température jusqu'à température ambiante, en laissant ainsi l'agitation pendant 12h. On obtient ainsi une suspension colloïdale, par hydrolyse de la solution alcoolique d'isopropoxyde d'aluminium.

b) imprégnation du noir de carbone:

On utilise comme noir de carbone de départ un noir du type N234 (grade pneumatique).

40 g de noir de carbone N234 sont placés dans le ballon d'un évaporateur rotatif (Rotavapor R-124 de Büchi commercialisé par la société Bioblock). La température du bain est fixée à 50°C et la vitesse de rotation à 80 tours/min (temps "t" = 0). Après 55 min d'agitation (soit t=55min), on ajoute un tiers de la solution d'imprégnation, un autre tiers à t=85 min, et enfin le dernier tiers à t=115 min. On maintient ainsi l'agitation durant environ trois heures, puis on fait le vide (t=5h) pour évacuer l'excès de solvant alcoolique; après 30 minutes, la température du bain est fixée à 60°C et on poursuit ainsi l'agitation sous vide jusqu'à t=7h, pour une évacuation complète du solvant. Le noir de carbone ainsi imprégné est alors retiré du ballon, placé dans une étuve sous vide (200 mm de Hg) et séché à 100°C pendant une nuit. Le noir ainsi traité est ensuite extrait par l'eau durant 48 heures au Soxhlet, puis séché à nouveau dans les mêmes conditions.

c) traitement thermique:

Le noir de carbone est ensuite placé dans un four tubulaire (type Carbolite CTF 15/75 610 commercialisé par la société Osi), sous flux d'argon (200 ml/min), puis soumis au cycle thermique suivant: 30 min à 200°C, puis 1 heure à 800°C ; les rampes de montée en température sont fixées à 10°C/min.

Les caractéristiques du noir de carbone conforme à l'invention ainsi obtenu sont résumées dans le tableau 1. On note que la taille $d_w$ des particules n'est pas significativement modifiée par rapport au noir de départ, mais que sa surface BET est par contre fortement augmentée, de plus de 50%. Le taux d'aluminium est élevé, d'environ 1,5%, résultat bien corrélé au taux de cendres mesuré.

D'autre part, la vitesse de désagglomération $\alpha$ est nettement supérieure à la limite inférieure fixée de $1.10^{-3}$ $\mu m^{-1}/s$ (soit 2/3 de $\alpha_o$). Une vitesse $\alpha$ de $3,1.10^{-3}$ $\mu m^{-1}/s$ doit être considérée ici comme particulièrement élevée, puisque supérieure de 100% environ à la vitesse $\alpha_o$ enregistrée sur une silice témoin hautement dispersible (Zeosil 1165MP).

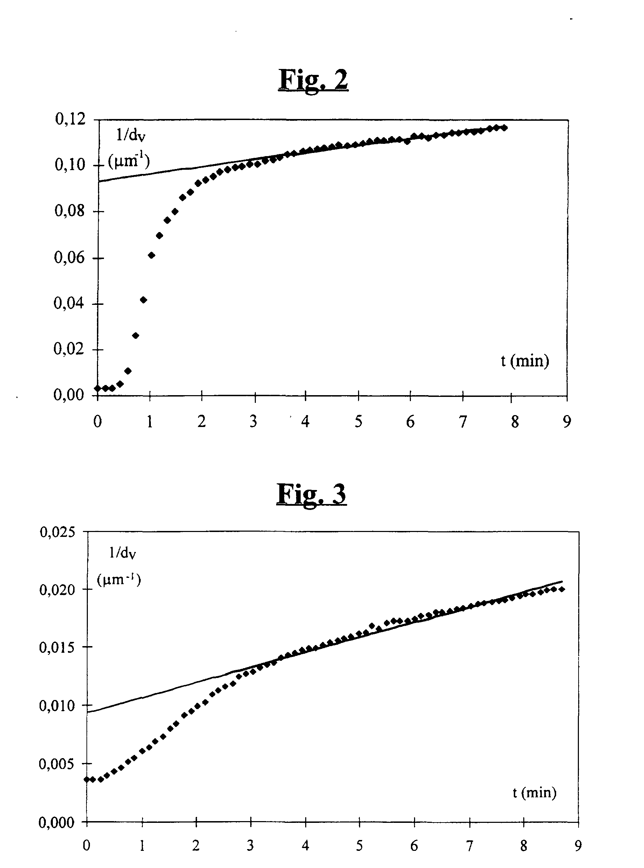

Les figures 2 et 3 reproduisent les courbes d'évolution $[1/d_v(t) = \int(t)]$ de la taille des agglomérats, enregistrées au test de désagglomération aux ultrasons, respectivement pour le noir modifié de l'invention et pour cette silice témoin hautement dispersible (Zeosil 1165MP), la vitesse $\alpha$ déterminée étant la pente de la droite $[1/d_v(t) = \int(t)]$.

On voit bien sur ces figures 2 et 3 que les premiers points enregistrés ("t" variant de 0 à 30 s environ) correspondent à la mesure du diamètre initial $d_v[0]$, suivie (après mise en action de la sonde ultrasons) d'un passage progressif (ici, "t" de 30 s à 3 min environ) à un régime stable de désagglomération pendant lequel l'inverse de "$d_v$" varie bien linéairement avec le temps "t" ; l'enregistrement des données est stoppé ici au bout de 8 minutes environ. On en déduit par un calcul élémentaire de régression linéaire, pris en charge par le calculateur du granulomètre, la vitesse de désagglomération $\alpha$ dans la zone de régime stable de désagglomération.

Le noir de carbone N234 de départ présente quant à lui, au même test de désagglomération aux ultrasons, une vitesse $\alpha$ particulièrement élevée ($17.10^{-3}$ $\mu m^{-1}/s$ - non représenté sur les figures), ce qui était attendu compte tenu de la très haute dispersibilité connue des noirs de carbone pour pneumatiques, de manière générale.

III-2. Essais en compositions de caoutchouc

On compare ci-après deux compositions de caoutchouc diénique destinées à la fabrication de pneumatiques ou de bandes de roulement pour pneumatiques. L'élastomère SBR (copolymère de styrène-butadiène), préparé en solution, comprend 25% de styrène, 58% de motifs polybutadiène 1-2 et 23 % de motifs polybutadiène 1-4 trans.

Pour la préparation des compositions, on procède de la manière connue suivante: on introduit l'élastomère diénique dans un mélangeur interne rempli à 75 % et dont la température est d'environ 70°C, puis après un temps approprié de malaxage, par exemple de l'ordre de 1 minute, on ajoute tous les autres ingrédients à l'exception du système de vulcanisation. On conduit alors un travail thermomécanique d'une durée de 5,5 minutes environ, avec une vitesse moyenne des palettes de 70 tours/min, jusqu'à obtenir une température de tombée d'environ 140°C. On récupère le mélange ainsi obtenu puis on ajoute le système de vulcanisation sur un mélangeur externe (homo-finisseur) à 30°C. La vulcanisation est effectuée à 150°C pendant 40 min.

Les 2 compositions testées sont identiques aux différences près qui suivent:

- composition No1: charge renforçante conventionnelle constituée par le noir de carbone N234 non traité (témoin);

- composition No2: charge renforçante constituée exclusivement par le noir de carbone N234 modifié conforme à l'invention, auquel est associé un agent de couplage pour assurer la liaison entre la couche alumineuse présente à sa surface et l'élastomère.

L'agent de couplage utilisé ici est du tétrasulfure de bis(3-triéthoxysilylpropyl), de formule $[(C_2H_5O)_3Si(CH_2)_3S_2]_2$, commercialisé par la société Degussa sous la dénomination Si69 ; il est utilisé à un taux correspondant à une couverture de surface d'environ $9,6.10^{-7}$ mole/m$^2$ de noir de carbone modifié.

Les tableaux 2 et 3 donnent successivement la formulation des différentes compositions (tableau 2 - taux des différents produits exprimés en pce), leurs propriétés avant et après cuisson (150°C, 40 min - tableau 3).

L'étude de ces différents résultats conduit aux observations suivantes:

- la valeur de plasticité Mooney apparaît légèrement plus basse sur la composition No2 comportant le noir modifié que sur la composition témoin No1, résultat en tout cas révélateur d'une très bonne aptitude à la mise en oeuvre à l'état cru de la composition No2;

- la composition No2 présente des valeurs de modules, notamment de modules M100 et M300 indicateurs de manière connue de la qualité de renforcement, qui sont au moins égaux sinon supérieurs à ceux obtenus sur la composition témoin No1;

- la composition No2 présente en outre des propriétés hystérétiques très avantageuses, comparées à celles observées sur la composition chargée de noir de carbone conventionnel ; on observe une diminution très sensible des pertes par rebond (PH), de la non-linéarité $\Delta G^*$ et de $\tan(\delta)_{max}$.

Ainsi, de manière inattendue, l'utilisation du noir modifié pour pneumatique permet d'améliorer très sensiblement les propriétés d'hystérèse, sans affecter les propriétés de mise en oeuvre à l'état cru ni celles de renforcement après cuisson. Ces résultats laissent présager à la fois une bonne aptitude de résistance à l'usure et une résistance au roulement particulièrement basse pour des bandes de roulement de pneumatiques tout en garantissant à ces dernières une conductivité électrique satisfaisante.

On pense que le procédé spécifique de l'invention (imprégnation à froid suivie d'un traitement thermique) permet de déposer, à la surface des particules ou agrégats de noir de carbone, une couche alumineuse fine, stable, fortement adhérente et répartie de manière relativement homogène (taille moyenne des particules peu modifiée mais forte augmentation de la surface BET). Une telle qualité de recouvrement, combinée aux autres caractéristiques du noir modifié de l'invention, pourrait expliquer les performances améliorées de ce dernier dans les compositions de caoutchouc pour pneumatiques, à la fois par rapport à un noir de carbone conventionnel (baisse de l'hystérèse) et par rapport à une silice précipitée même hautement dispersible (augmentation de la dispersibilité ; conductivité électrique élevée).

Les noirs modifiés de l'invention offrent ainsi une alternative intéressante à l'emploi de noirs de carbone conventionnels, de silices hautement dispersibles, voire de noirs de carbone revêtus d'une couche siliceuse.

Tableau 1

| | N234 | N234 modifié |
|---|---|---|
| Cendres 825°C/air (%) | 0.06 | 3.24 |
| Taux Al (%) | 0.03 | 1.49 |
| Densité He (g/ml) | 1.9926 | 2.0329 |
| Surface BET (m$^2$/g) | 117 | 193 |
| $d_w$ (nm) | 65 | 68 |
| $\alpha$ ($\mu$m$^{-1}$/s) | 0.0174 | 0.0031 |

Tableau 2

| Numéro de la composition | 1 | 2 |
|---|---|---|
| SBR (1) | 100 | 100 |
| N234 | 50 | -- |
| N234 modifié | -- | 50 |
| Si69 | -- | 5 |

(1) Copolymère de butadiène styrène

Tableau 2   (suite)

| Numéro de la composition | 1 | 2 |
|---|---|---|
| ZnO | 3 | 3 |
| Acide stéarique | 1.5 | 1.5 |
| Antioxydant (2) | 1 | 1 |
| DPG (3) | 0.5 | 0.5 |
| Soufre | 1.5 | 1.5 |
| CBS (4) | 2 | 2 |

(2) N-1,3 diméthylbutyl N-phénylparaphénylènediamine

(3) Diphénylguanidine

(4) N-cyclohexyl-2-benzothiazylsulfénamide

Tableau 3

| Numéro de la composition | 1 | 2 |
|---|---|---|
| Plasticité (UM) | 106 | 101 |
| M10 (MPa) | 6.41 | 6.27 |
| M100 (MPa) | 5.32 | 5.68 |
| M300 (MPa) | 14.09 | 14.25 |
| PH(%) | 31.6 | 28.1 |
| $\Delta G^*$ (MPa) | 4.81 | 3.20 |
| $\tan(\delta)_{max}$ | 0.345 | 0.291 |

**Revendications**

1. Noir de carbone renforçant pour pneumatique, **caractérisé par** les points suivants:

    - (i) il est revêtu au moins en partie d'une couche d'oxyde et/ou hydroxyde d'aluminium;
    - (ii) sa surface spécifique BET est comprise entre 30 et 400 $m^2$/g;
    - (iii) sa taille moyenne (en masse) de particules, notée $d_w$, est comprise entre 20 et 400 nm;
    - (iv) sa vitesse de désagglomération, notée $\alpha$, mesurée au test dit de désagglomération aux ultrasons, à 10% de puissance d'une sonde ultrasons de 600 watts, est supérieure à $1.10^{-3}$ $\mu m^{-1}$/s.

2. Noir de carbone selon la revendication 1, **caractérisé en ce que** sa vitesse de désagglomération $\alpha$ est supérieure à $1,5.10^{-3}$ $\mu m^{-1}$/s.

3. Noir de carbone selon l'une quelconque des revendications 1 ou 2, **caractérisé en ce que** son taux d'aluminium de surface est supérieur à 0,5% (% en masse).

4. Noir de carbone selon la revendication 3, **caractérisé en ce que** son taux d'aluminium de surface est compris entre 0,5% et 5%.

5. Noir de carbone selon la revendication 4, **caractérisé en ce que** son taux d'aluminium de surface est compris entre 0,5% et 3%.

6. Procédé pour obtenir un noir de carbone conforme à l'une quelconque des revendications 1 à 5, **caractérisé en ce qu'**il comporte les étapes suivantes:

    a) - on part d'un noir de carbone de grade pneumatique;
    b) - on imprègne ce noir de carbone de départ d'une suspension colloïdale formée par hydrolyse d'une solution d'alkoxyde d'aluminium dans un solvant alcoolique;

c) - on élimine le solvant alcoolique par évaporation;

d) - on traite thermiquement le noir ainsi imprégné de manière à transformer la couche alumineuse présente à sa surface en une couche adhérente d'oxyde et/ou hydroxyde d'aluminium.

**7.** Procédé selon la revendication 6, **caractérisé en ce que** le noir de carbone de départ est un noir de carbone renforçant choisi parmi les séries 100, 200 ou 300 (grades ASTM).

**8.** Procédé selon les revendications 6 ou 7, **caractérisé en ce que** l'alkoxyde d'aluminium est un alkoxyde comportant de 1 à 6 atomes de carbone.

**9.** Procédé selon la revendication 8, **caractérisé en ce que** l'alkoxyde d'aluminium est choisi parmi le méthoxyde, l'éthoxyde, l'(iso)propoxyde et les butoxydes d'aluminium, ou un mélange de deux ou plus de ces composés.

**10.** Procédé selon l'une quelconque des revendications 6 à 9, **caractérisé en ce que** le solvant alcoolique est sélectionné parmi le méthanol, l'éthanol, l'(iso)propanol, les différents isomères du butanol, ou un mélange de deux ou plus de ces composés.

**11.** Procédé selon l'une quelconque des revendications 6 à 10, **caractérisé en ce que** la suspension colloïdale comporte de l'acide nitrique.

**12.** Procédé selon l'une quelconque des revendications 6 à 11, **caractérisé en ce que** le traitement thermique est conduit à une température comprise entre 100 et 900°C.

**13.** Utilisation à titre de charge renforçante, dans une composition de caoutchouc diénique utilisable pour la fabrication de pneumatiques, d'un noir de carbone conforme à l'une quelconque des revendications 1 à 5.

**14.** Procédé pour renforcer une composition de caoutchouc diénique utilisable pour la fabrication de pneumatiques, **caractérisé en ce qu'**on incorpore à cette composition, par mélangeage dans un mélangeur interne, un noir de carbone conforme à l'une quelconque des revendications 1 à 5, avant l'introduction du système de vulcanisation.

**Claims**

**1.** A reinforcing carbon black for tyres, **characterised by** the following points:

(i) it is coated at least in part by a layer of aluminium oxide and/or hydroxide;

(ii) its specific BET surface area is between 30 and 400 $m^2/g$;

(iii) its average particle size (by mass), $d_w$, is between 20 and 400 nm;

(iv) its disagglomeration rate, $\alpha$, measured in what is called the ultrasound disagglomeration test, at 10% power of a 600-watt ultrasonic probe, is greater than $1x10^{-3}$ $\mu m^{-1}/s$.

**2.** A carbon black according to Claim 1, **characterised in that** its disagglomeration rate $\alpha$ is greater than $1.5x10^{-3}$ $\mu m^{-1}/s$.

**3.** A carbon black according to Claim 1 or 2, **characterised in that** the amount of surface aluminium thereof is greater than 0.5% (% by mass).

**4.** A carbon black according to Claim 3, **characterised in that** the amount of surface aluminium thereof lies between 0.5% and 5%.

**5.** A carbon black according to Claim 4, **characterised in that** the amount of surface aluminium thereof lies between 0.5% and 3%.

**6.** A process for obtaining a carbon black according to any one of Claims 1 to 5, **characterised in that** it comprises the following steps:

a) the starting point is a tyre-grade carbon black;

b) this starting carbon black is impregnated with a colloidal suspension formed by hydrolysis of a solution of aluminium alkoxide in an alcoholic solvent;

c) the alcoholic solvent is removed by evaporation;

d) the black thus impregnated is heat-treated so as to transform the aluminous layer present at its surface into an adhering layer of aluminium oxide and/or hydroxide.

7. A process according to Claim 6, **characterised in that** the starting carbon black is a reinforcing carbon black selected from among the series 100, 200 or 300 (ASTM grades).

8. A process according to Claims 6 or 7, **characterised in that** the aluminium alkoxide is an alkoxide comprising 1 to 6 carbon atoms.

9. A process according to Claim 8, **characterised in that** the aluminium alkoxide is selected from among aluminium methoxide, ethoxide, (iso)propoxide and butoxides, or a mixture of two or more of these compounds.

10. A process according to any one of Claims 6 to 9, **characterised in that** the alcoholic solvent is selected from among methanol, ethanol, (iso)propanol, the various isomers of butanol, or a mixture of two or more of these compounds.

11. A process according to any one of Claims 6 to 10, **characterised in that** the colloidal suspension comprises nitric acid.

12. A process according to any one of Claims 6 to 11, **characterised in that** the heat treatment is performed at a temperature of between 100 and 900°C.

13. The use, as reinforcing filler, in a diene rubber composition which can be used for manufacturing tyres, of a carbon black according to any one of Claims I to 5.

14. A process for reinforcing a diene rubber composition which can be used for the manufacture of tyres, **characterised in that** a carbon black according to any one of Claims I to 5 is incorporated in this composition by mixing in an internal mixer, before the introduction of the vulcanisation system.

**Patentansprüche**

1. Verstärkender Ruß für Luftreifen, **gekennzeichnet durch** die folgenden Punkte:

(i) Er ist zumindest zum Teil mit einer Schicht aus Aluminiumoxid und/oder Aluminiumhydroxid bedeckt;

(ii) seine spezifische BET-Oberfläche liegt im Bereich von 30 bis 400 $m^2$/g;

(iii) die mittlere (auf die Masse bezogen) Größe seiner Partikel, die als $d_w$ bezeichnet wird, liegt im Bereich von 20 bis 400 nm; und

(iv) die mit $\alpha$ bezeichnete Geschwindigkeit der Desagglomeration, die im Test zur Desagglomeration mit Ultraschall bei 10% Leistung einer Ultraschallsonde von 600 Watt ermittelt wird, liegt über $1 \cdot 10^{-3}$ $\mu m^{-1}$/s.

2. Ruß nach Anspruch 1, **dadurch gekennzeichnet, dass** die Geschwindigkeit der Desagglomeration $\alpha$ über $1,5 \cdot 10^{-3}$ $\mu m^{-1}$/s liegt.

3. Ruß nach einem der Ansprüche 1 oder 2, **dadurch gekennzeichnet, dass** der Aluminiumgehalt der Oberfläche über 0,5% (Masse-%) liegt.

4. Ruß nach Anspruch 3, **dadurch gekennzeichnet, dass** der Aluminiumgehalt der Oberfläche im Bereich von 0,5 bis 5% liegt.

5. Ruß nach Anspruch 4, **dadurch gekennzeichnet, dass** der Aluminiumgehalt der Oberfläche im Bereich von 0,5 bis 3% liegt.

6. Verfahren zur Herstellung eines Rußes nach einem der Ansprüche 1 bis 5, **gekennzeichnet durch** die folgenden Schritte:

(a) Es wird von einem Ruß mit Reifengüte ausgegangen;

(b) dieser anfänglich eingesetzte Ruß wird mit einer kolloidalen Suspension getränkt, die **durch** Hydrolyse einer Lösung von Aluminiumalkoxid in einem alkoholischen Lösungsmittel gebildet wird;

(c) das alkoholische Lösungsmittel wird **durch** Verdampfen entfernt;

(d) der imprägnierte Ruß wird thermisch so behandelt, dass die an seiner Oberfläche vorliegende aluminiumhaltige Schicht in eine haftende Schicht von Aluminiumoxid und/oder Aluminiumhydroxid umgewandelt wird.

**7.** Verfahren nach Anspruch 6, **dadurch gekennzeichnet, dass** der anfänglich eingesetzte Ruß ein verstärkender Ruß ist, der unter den Rußen der Serien 100, 200 oder 300 (Grades ASTM) ausgewählt ist.

**8.** Verfahren nach Anspruch 6 oder 7, **dadurch gekennzeichnet, dass** das Aluminiumalkoxid ein Alkoxid mit 1 bis 6 Kohlenstoffen ist.

**9.** Verfahren nach Anspruch 8, **dadurch gekennzeichnet, dass** das Aluminiumalkoxid unter Aluminiummethoxid, Aluminiumethoxid, Aluminium(iso)propoxid und den Aluminiumbutoxiden oder Gemischen von zwei oder mehreren dieser Verbindungen ausgewählt ist.

**10.** Verfahren nach einem der Ansprüche 6 bis 9, **dadurch gekennzeichnet, dass** das alkoholische Lösungsmittel unter Methanol, Ethanol, (Iso)propanol, den verschiedenen Isomeren von Butanol oder Gemischen von zwei oder mehreren dieser Verbindungen ausgewählt ist.

**11.** Verfahren nach einem der Ansprüche 6 bis 10, **dadurch gekennzeichnet, dass** die kolloidale Suspension Salpetersäure enthält.

**12.** Verfahren nach einem der Ansprüche 6 bis 11, **dadurch gekennzeichnet, dass** die thermische Behandlung bei einer Temperatur von 100 bis 900°C durchgeführt wird.

**13.** Verwendung eines Rußes nach einem der Ansprüche 1 bis 5 als verstärkenden Füllstoff in einer Dienkautschukmischung, die zur Herstellung von Luftreifen verwendbar ist.

**14.** Verfahren zur Verstärkung einer Dienkautschukmischung, die zur Herstellung von Luftreifen verwendbar ist, **dadurch gekennzeichnet, dass** in die Zusammensetzung durch Mischen in einem Innenmischer ein Ruß nach einem der Ansprüche 1 bis 5 eingearbeitet wird, bevor das Vulkanisationssystem zugegeben wird.

EP 1 034 222 B1

## Fig. 1

15

## Fig. 2

## Fig. 3